# FASCICULE DE BREVET EUROPEEN

(11) **EP 2 508 400 B1**
(45) Date de publication et mention de la délivrance du brevet: **29.06.2016**
(21) Numéro de dépôt: 12157472.7
(22) Date de dépôt: 29.02.2012
(51) Int. Cl.: B60T 11/26, B60T 17/06, B60T 17/22, B60T 15/48

(54) **Réservoir de liquide de frein**
Bremsflüssigkeitstank
Brake fluid reservoir

(30) Priorité: 04.04.2011 FR 1101006
(43) Date de publication de la demande: 10.10.2012
(73) Titulaire: Robert Bosch GmbH, 70442 Stuttgart (DE)
(72) Inventeur: Lenczner, Sylvain, 77450 ESBLY (FR); L'Aot, Jean-Michel, 93240 STAINS (FR); Maury, Vincent, 93210 La Plaine St Denis (FR)

(56) Documents cités:
- EP-A1- 1 352 800
- EP-A1- 1 570 890
- EP-A1- 1 626 180
- EP-A1- 2 279 921
- DE-A1-102007 037 225
- FR-A1- 2 473 971
- FR-A1- 2 844 240
- FR-A1- 2 918 944
- GB-A- 1 521 710
- US-A- 4 602 482

## Description

### Domaine de l'invention

La présente invention concerne un réservoir de liquide de frein en matière plastique, injectée, formé de l'assemblage d'un dessous et d'un dessus ayant un goulot de remplissage moulé en une seule pièce et équipé d'un filtre en forme de panier descendant dans le réservoir sous le niveau de remplissage.

### Etat de la technique

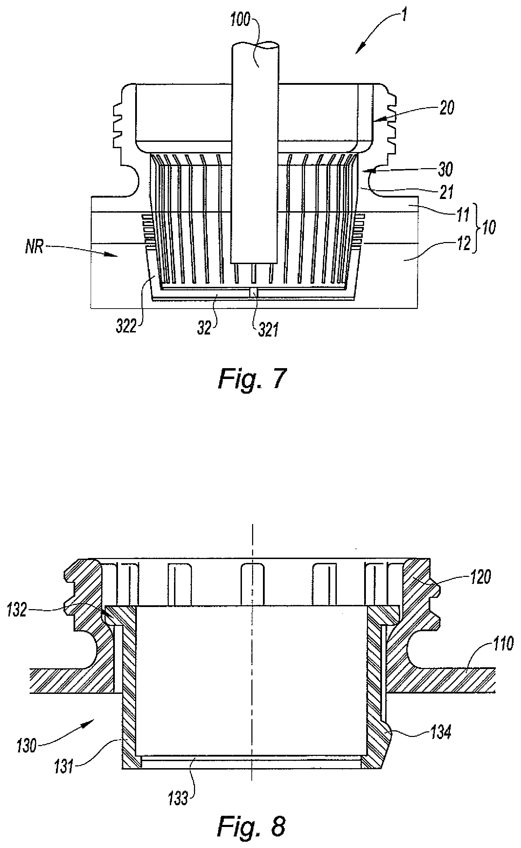

Les réservoirs de liquide de frein (figure 8) sont généralement réalisés en deux parties, un dessus 110 et un dessous ; le dessus comporte le goulot de remplissage 120 équipé d'un filtre 130 installé dans le goulot pour filtrer le liquide de frein que l'on introduit dans le réservoir au premier remplissage ou pour faire le complément.

Le filtre 130 se compose d'une partie cylindrique 131, munie d'une collerette périphérique 132 en partie supérieure et d'un fond 133 formé par une grille constituée d'une toile de filtre surmoulée dans le corps du filtre. Le filtre 130 est placé dans le goulot et pour y être retenu, il comporte en partie basse une butée 134 servant de retenue. Dans le goulot, le filtre se déforme pour faire passer la butée 134 sous l'extrémité inférieure du goulot 120 et arriver dans le réservoir.

Ce filtre connu, par exemple décrit dans le document DE 10 2007 037 225 A1, présente un certain nombre d'inconvénients. Il est composé de deux parties, le corps du filtre et la matière plastique surmoulée sur le corps du filtre pour former le support du filtre et les moyens de maintien du filtre dans le goulot. Cette pièce supplémentaire se traduit par un outillage supplémentaire et une opération de montage, c'est-à-dire globalement un coût élevé. En outre, il faut réaliser le goulot du réservoir pour créer une butée basse coopérant avec l'organe de retenue du filtre.

### But de l'invention

La présente invention a pour but de réaliser un réservoir de liquide de frein équipé d'un filtre, qui soit d'une fabrication plus simple et plus économique que la réalisation actuelle tout en bénéficiant de la simplicité de remplissage et de mise à niveau du liquide de frein dans le filtre, tant lors du premier remplissage que lors de remplissages d'appoint.

### Exposé et avantages de l'invention

A cet effet, l'invention concerne un réservoir de liquide de frein du type défini ci-dessus caractérisé en ce que le filtre constitué par un panier est réalisé en une seule pièce avec le goulot. La paroi latérale du panier est formée de lamelles latérales intérieures délimitant des fentes intérieures, et d'arceaux périphériques extérieurs délimitant des fentes périphériques, les arceaux croisant les lamelles intérieures, en étant réunis à celles-ci par une liaison par la matière et laissant des passages à l'intersection des fentes intérieures et des fentes périphériques.

Le réservoir a en particulier l'avantage de ne nécessiter aucune pièce supplémentaire ni d'aménagement du réservoir. Le filtre intégré ne risque pas de se perdre ou d'être oublié au montage ni ainsi d'être accidentellement crevé comme peut l'être une toile de filtre.

Le réservoir de liquide selon l'invention est d'une fabrication simple puisque le dessus se réalise en une seule opération de moulage par injection avec le filtre intégré dans le goulot. Cela facilite les opérations d'assemblage du réservoir puisque le dessus s'assemble directement au dessous sans nécessiter d'opérations supplémentaires telles que la mise en place d'un filtre qui serait constitué par une pièce étrangère réalisée et mise en place séparément. De plus, le filtre ne peut être oublié ou perdu.

Ce réservoir facilite également les opérations de premier remplissage à l'installation du circuit de frein.

Suivant une autre caractéristique avantageuse, les fentes des lamelles latérales sont parallèles à l'axe du goulot. Cette forme de réalisation simplifie la fabrication du réservoir puisque le noyau servant au moulage s'extrait du goulot dans la direction de l'axe.

Suivant une autre caractéristique avantageuse, les fentes intérieures des lamelles latérales sont contenues dans des plans radiaux passant par l'axe du goulot. Cette forme de réalisation assure non seulement une structure symétrique au filtre mais facilite également la réalisation du noyau du moule et la régularité de l'injection.

Selon une autre caractéristique, les fentes intérieures remontent dans le col du goulot, ce qui renforce le goulot.

Suivant une autre caractéristique avantageuse, les fentes intérieures débouchent dans la cavité du réservoir directement sous le plafond du dessus, ce qui évite le développement d'une bulle d'air qui serait prisonnière dans le réservoir au-dessus du niveau de liquide.

Dans le cas d'un fond de panier formant le filtre plein et bordé par une paroi périphérique définissant le niveau de remplissage du réservoir, cette forme de réalisation facilite la mise en place de l'équipement de remplissage automatique du circuit de frein puisque la ré-aspiration de liquide ne peut se faire en dessous de la paroi périphérique du fond.

Le fond plein et traversé par un perçage de section réduite évite que du liquide de frein ne soit prisonnier dans le fond du panier formant le filtre et simule un niveau de liquide de frein dans le réservoir alors que le niveau réel du liquide de frein peut être descendu en dessous du fond du panier du filtre.

Suivant une autre caractéristique avantageuse, le fond est formé de branches radiales laissant des fentes radiales intérieures dans le prolongement des fentes intérieures entre les lamelles latérales, croisant les arceaux concentriques aux branches radiales à leurs intersections, les fentes radiales et les fentes des arceaux du fond formant des passages.

Bien que dans ce cas, le niveau de remplissage ne soit pas défini par un fond plein bordé d'une paroi périphérique pleine, le fond percé de passages au même titre que les parois latérales peut définir le niveau supérieur de remplissage puisque la ré-aspiration pourra se faire jusqu'au niveau du fond percé du panier formant le filtre puisque l'équipement de ré-aspiration ne pourra descendre en dessous de ce niveau.

Suivant une autre caractéristique avantageuse, le panier formant le filtre a une forme tronconique.

Enfin, dans un mode de réalisation, les parois latérales comportent au moins une lame pleine correspondant à plusieurs lamelles et cette lame pleine est reliée au fond et aux arceaux périphériques.

### Dessins

La présente invention sera décrite ci-après de manière plus détaillée à l'aide d'exemples de réalisation représentés dans les dessins annexés dans lesquels :
- la figure 1 est une vue partielle en coupe de la partie supérieure d'un réservoir de liquide de frein au niveau du goulot équipé du filtre,
- la figure 2 est une vue de dessus du goulot intégrant le filtre,
- la figure 3 est une vue isométrique de dessous d'une partie de la paroi supérieure du réservoir de liquide de frein avec le filtre débouchant dans le réservoir selon une variante de réalisation,
- la figure 4 est une vue isométrique de dessous d'un autre mode de réalisation d'un réservoir à liquide de frein selon l'invention,
- la figure 5 est une vue isométrique de dessus du goulot et du filtre intégré,
- la figure 6 est une vue isométrique de dessous du filtre intégré,
- la figure 7 est une vue en coupe schématique montrant le remplissage à niveau du réservoir,
- la figure 8 est une vue en coupe du goulot d'un réservoir de liquide de frein muni d'un filtre selon l'état de la technique.

### Description de modes de réalisation de l'invention

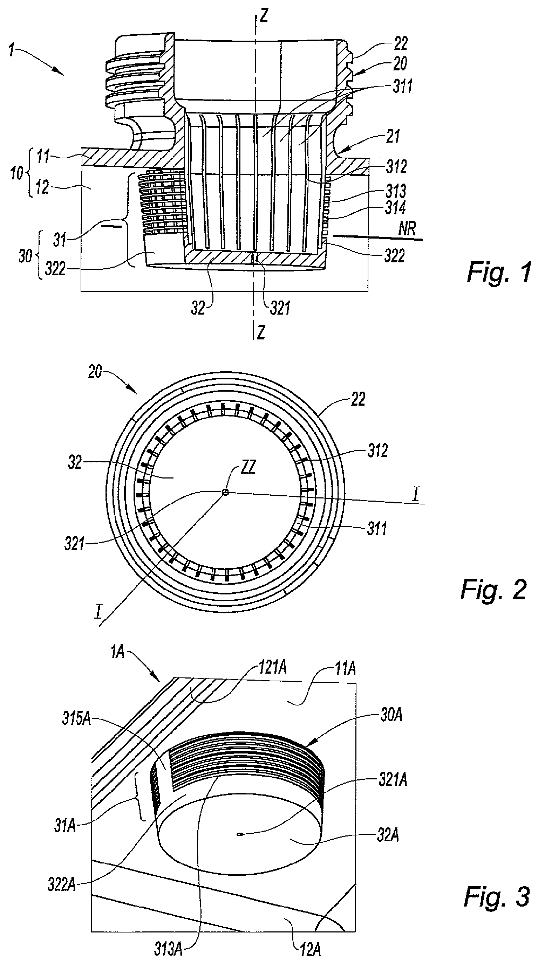

Les figures 1, 2 montrent partiellement un premier mode de réalisation d'un réservoir de liquide de frein 1 en matière plastique selon l'invention. Le réservoir est formé de deux parties, un dessus 10 et un dessous, en forme de boîtes, moulés chacun séparément en matière plastique et assemblés selon un bord de jonction correspondant sensiblement au plan médian du réservoir. Globalement, le réservoir a une forme parallélépipédique et le dessus 10 comporte un goulot 20, le dessous étant muni d'orifices reliés au maître-cylindre de frein pour l'alimentation de sa chambre primaire et de sa chambre secondaire avec du liquide de frein.

Les dessins se limitent à la représentation des parties essentielles du réservoir concernées par l'invention.

Ainsi, la figure 1 est une vue en coupe selon deux plans de coupe (I/ZZ/I) en dièdre passant par l'axe ZZ du goulot 20 (figure 2). Le goulot de remplissage dans la paroi supérieure 11 du dessus 10 se prolonge sous cette paroi par un filtre 30 en forme de panier, réalisé dans la matière du goulot 20 et du dessus 10, en une seule pièce avec le goulot 20 et le dessus 10 du réservoir. La paroi supérieure 11 se poursuit par des parois latérales 12 partiellement représentées, pour constituer le dessus 10.

Le filtre 30 en panier a une paroi latérale 31 formée par des lamelles latérales 311 intérieures au goulot laissant entre elles des fentes intérieures 312, et d'un fond 32. Extérieurement, la paroi 31 est délimitée par des arceaux périphériques 313 laissant entre eux des fentes périphériques 314. Les arceaux 313 sont réunis par la matière aux points de jonction avec les lamelles 311 ; les fentes périphériques 314 entre les arceaux 313 croisent les fentes intérieures 312 entre les lamelles 311 et constituent les points de passage du liquide à travers le filtre 30. Selon l'exemple de réalisation, les fentes intérieures 312 sont situées dans des plans radiaux passant par l'axe ZZ du goulot 20. Ces fentes 312 s'étendent, pour des raisons de fabrication, au-delà du panier formant le filtre 30 pour remonter à l'intérieur du goulot 20, dans le col 21 de celui-ci, et arriver près de la zone du goulot munie du filetage extérieur 22. Les arceaux 313 sont dans des plans perpendiculaires à l'axe ZZ et s'inscrivent extérieurement dans une enveloppe tronconique.

La figure 2 montre la forme des fentes intérieures 312 situées dans des plans radiaux, passant par l'axe ZZ ; les lamelles 311 sont identiques et réparties régulièrement sur toute la périphérie intérieure du col 21 et du panier 30. La figure 1 montre l'extension longitudinale des fentes dans le panier 30 et dans la zone du col 21 du goulot 20 ainsi que la forme tronconique du panier.

Le fond 32 du panier est plein et plat. En son milieu, il est traversé par un orifice 321 de section réduite de sorte que le débit de liquide à travers cet orifice est très faible. Le fond 32 est bordé par une paroi périphérique pleine 322, remontant sur une certaine hauteur sur la paroi latérale 31 et définissant le niveau de remplissage NR du réservoir.

Pour des raisons techniques, le réservoir 1 n'est pas rempli de liquide de frein jusque sous le plafond ou remontant éventuellement dans le goulot 20 ; un volume d'air est prévu sous le plafond 11 et le niveau de remplissage NR se situe nettement sous le plafond. La hauteur du panier formant le filtre 30 est fixée pour que le panier descende en dessous du niveau de remplissage NR, pour que la paroi périphérique pleine 322 remonte jusqu'à ce niveau de remplissage NR.

La figure 1 montre que les orifices du filtre 30 ainsi constitué s'étendent pratiquement sur toute la hauteur du panier, au-dessus du bord périphérique 322 du fond, et cela jusque sous le plafond 11 du réservoir.

La réalisation du réservoir de liquide de frein décrit ci-dessus se fait de manière très simple par moulage par injection de matière plastique à l'aide d'un moule en deux parties au niveau du goulot 20, de l'intérieur du goulot et du panier 30 ; le moule comporte par exemple trois parties pour l'autre face du réservoir comprenant le plafond 11 et les arceaux 313 ainsi que le fond 32 du panier 30.

La partie du moule pour le dessus 10 réalise aussi le goulot 20 et son filetage 22. Le noyau qui sert à mouler les lamelles 311 et les fentes intérieures 312 est extractible dans la direction des fentes, c'est-à-dire dans la direction de l'axe ZZ du goulot 20.

La partie du moule servant au moulage du filetage 22 est de préférence en deux parties qui se dégagent latéralement pour sortir du filetage.

La partie du moule réalisant le panier 30 en saillie dans la cavité du réservoir 1 se compose de préférence de deux parties qui se dégagent latéralement des arceaux 313 comme pour le filetage 22 du goulot 20.

Selon la variante de réalisation du réservoir 1A de la figure 3, la paroi latérale 31A du panier 301 comporte une ou deux bandes latérales 315A, extérieures, parallèles aux lamelles et occupant la largeur de deux ou trois lamelles. Cette bande 315A est réunie au fond 32A du panier 30 et les arceaux 313A sont issus des côtés de cette ou de ces bandes latérales 315A.

Les autres parties de cette variante de réservoir 1A, identiques à celles du mode de réalisation des figures 1 et 2, portent les mêmes références complétées du suffixe A. Leur description ne sera pas reprise. Il convient seulement de souligner que cette figure 3 montre le plafond 11A, les côtés 12A et le bord inférieur 121A des côtés 12A, par lequel se fait l'assemblage à l'autre partie du réservoir.

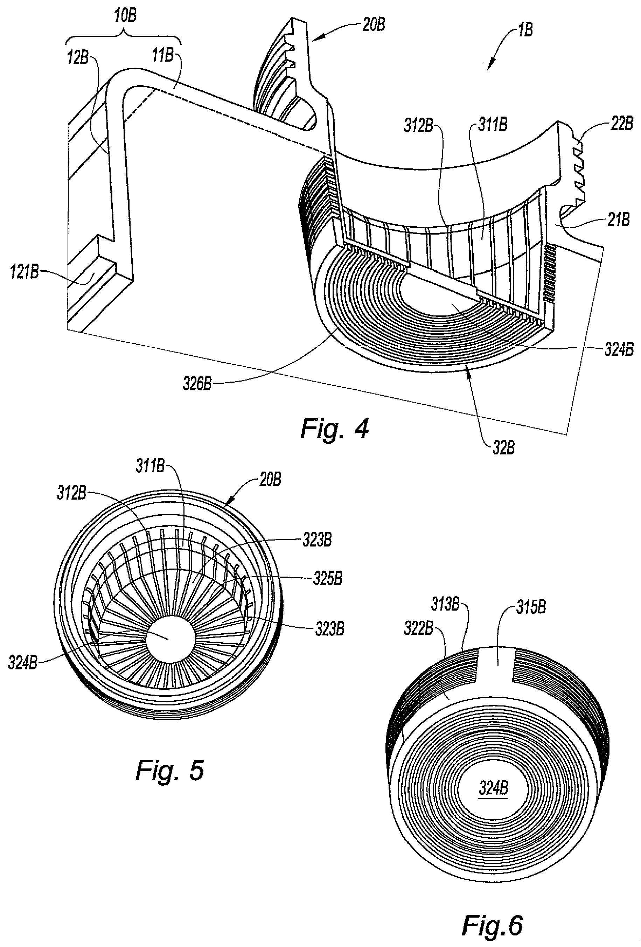

Les figures 4 à 6 montrent un autre mode de réalisation du réservoir 1B. Cette variante diffère du mode de réalisation précédent par la forme du fond du panier du filtre. Pour la description de cette variante, les éléments identiques ou analogues à ceux déjà décrits ci-dessus portent les mêmes références numériques augmentées du suffixe B et leur description ne sera pas systématiquement reprise.

Les lamelles intérieures 311B de la paroi latérale 311 du filtre sont formées comme dans le premier mode de réalisation. Le fond 32B, en revanche, n'est pas plein, mais constitué comme les parois latérales par l'intersection de branches radiales 323B délimitant, jusqu'à une certaine distance du centre 324B du fond 32B (sur l'axe ZZ) le prolongement des lamelles latérales 311B, Les branches 322B de forme triangulaire laissent entre elles des fentes radiales325B dans le prolongement des fentes intérieures 312B entre les lamelles latérales 311B. En fait, ces fentes 322B, 325B sont réalisées par des lamelles du moule engagées dans le fond et dans les fentes latérales. Le centre 324B du fond 32B est plein.

Extérieurement (figures 4 et 6), le fond 32B est constitué par des arceaux concentriques 326B assimilables aux arceaux 313B de la paroi latérale 31A et coupant les fentes radiales 325B du fond pour former des passages.

Ainsi, dans ce mode de réalisation, le fond 32B est ouvert et filtrant au même titre que la paroi latérale 31B.

La figure 4 montre une grande partie de la forme du dessus 10B du réservoir 1B. Ce dessus 10B a une forme de boîte avec un bord d'assemblage 121B, comme le dessous. Le bord d'assemblage est réuni au bord d'assemblage du dessous du réservoir (pièce non représentée) par une soudure par la matière.

La figure 7 montre le remplissage du réservoir de liquide de frein 1 selon le premier mode de réalisation (figures 1, 2, 3). Le remplissage du circuit de frein se fait à travers le goulot et le réservoir à l'aide d'un équipement fixé au goulot.

Avant la première mise en service du circuit de frein, on le purge par le goulot 20 du réservoir, puis une fois l'air évacué du circuit de frein, on introduit le liquide de frein dans le circuit à travers le réservoir. Le réservoir est ainsi rempli à un niveau quelconque, supérieur au niveau de remplissage final ou normal NR.

Puis on ré-aspire le liquide de frein excédentaire à travers le goulot jusqu'à ce que le niveau de remplissage normal NR soit atteint. Ces différentes opérations de mise sous vide pour purger le circuit de frein, de remplissage avec du liquide de frein, et de mise à niveau, se font à l'aide d'un unique équipement 100 installé sur le goulot 20. Cet équipement est nécessairement adapté au type de réservoir dans lequel est défini le niveau de remplissage par la réalisation de cet équipement de remplissage. Actuellement, l'équipement est différent d'un type de réservoir à l'autre à cause de la forme du réservoir et surtout de la forme du goulot et du niveau de remplissage.

Mais grâce à l'invention, l'équipement de remplissage 100 n'aura pas à être réglé en fonction du type particulier de réservoir 1 et de niveau de remplissage normal NR car ce niveau est défini par la hauteur du bord 322 du fond 32. En effet, quel que soit le niveau du liquide après le premier remplissage, qui peut atteindre le plafond 11 du réservoir et même remonter dans le goulot 20, la canule de ré-aspiration 100 qui vient dans le panier, ne pourra aspirer que le liquide qui arrive dans le panier 30.

Le niveau de remplissage NR étant défini par le bord plein 322 du panier 30. Dès que le liquide dans le réservoir atteint le bord 322, il ne continue plus d'arriver dans le fond 32 du panier et l'aspiration s'arrête. Le niveau est ainsi réglé.

Le fond 32 du panier 30 comporte certes un petit perçage 321 mais qui a une section trop faible pour permettre une arrivée massive de liquide de frein du réservoir, car à l'extérieur du filtre, il est au niveau normal NR et, à l'intérieur, il a été ré-aspiré pratiquement jusqu'au fond 32.

Comme l'opération de mise sous vide, de remplissage et de mise à niveau du liquide de frein se fait extrêmement rapidement, la faible quantité de liquide de frein qui remonte pendant cette opération à travers le perçage 321 du fond 32 dans le panier est négligeable.

Le perçage 321 a son utilité pour le fonctionnement normal du réservoir. Il permet au liquide de frein de remonter progressivement dans le fond 32 du panier jusqu'à atteindre sensiblement le niveau du bord de la paroi périphérique 322 au même niveau que dans la partie restante du réservoir. Cela permet de contrôler à vu le niveau du liquide de frein dans le réservoir 1 lors des interventions d'entretien du véhicule.

Si le liquide de frein n'apparaît pas à l'intérieur du filtre 30, cela signifie nécessairement que le niveau du liquide de frein dans le restant du réservoir est descendu en dessous du niveau du fond du panier du filtre 30.

Il suffit alors de compléter en versant du liquide de frein dans le goulot 20 jusqu'à ce que, par ce remplissage fait à la demande et occasionnel, on atteigne de nouveau le niveau du bord plein 322 du fond 32 du panier 30. Ce bord plein 322 se voit au moment du versement, aussi est-il facile de le respecter pendant le versement du complément de liquide de frein.

Une telle possibilité de contrôle optique n'est pas utilisable pour le premier remplissage du circuit de frein qui se fait de manière automatique.

### NOMENCLATURE

- 1: Réservoir

- 10, 10A, 10B: Dessus
- 11, 11A, 11B: Paroi supérieure
- 12, 12A, 12B: Côté(s)

- 20, 20A, 20B: Goulot

- 30, 30A, 30B: Filtre/panier
- 31, 31A, 31B: Paroi latérale
- 311, 311A, 311B: Lamelle latérale
- 312, 312A, 312B: Fente intérieure/fente longitudinale
- 313, 313A, 313B: Arceau périphérique
- 314, 314A, 314B: Fente périphérique
- 315A: Bande latérale
- 32, 32A, 32B: Fond
- 321, 321A, 321B: Orifice
- 322, 322A, 322B: Paroi périphérique pleine
- 323B: Branche radiale
- 324B: Centre du fond
- 325B: Fente radiale
- 326B: Arceaux concentriques

## Revendications

1. Réservoir de liquide de frein en matière plastique, injectée, formé de l'assemblage d'un dessous et d'un dessus ayant un goulot de remplissage moulé en une seule pièce et équipé d'un filtre (30, 30A, 30B) en forme de panier descendant dans le réservoir sous le niveau de remplissage, réalisé en une seule pièce avec le goulot (20, 20A, 20B),
réservoir **caractérisé en ce que**
- la paroi latérale (31, 31A, 31B) du panier est formée de lamelles latérales intérieures (311, 311A, 311B) délimitant des fentes intérieures (312, 312A, 312B), et d'arceaux périphériques extérieurs (313, 313A, 313B) laissant des fentes périphériques (314, 314A, 314B), les arceaux croisant les lamelles intérieures en étant réunis à celles-ci par une liaison par la matière et formant des passages à l'intersection des fentes intérieures et des fentes périphériques.

2. Réservoir selon la revendication 1,
**caractérisé en ce que**
le fond (32, 32A) du panier formant le filtre (30, 30A) est plein et bordé par une paroi périphérique (322, 322A) définissant le niveau de remplissage normal (NR) du réservoir (1, 1A).

3. Réservoir de liquide de frein selon la revendication 1,
**caractérisé en ce que**
les fentes intérieures (312, 312A, 312B) des lamelles latérales (311, 311A, 311B) sont parallèles à l'axe (ZZ) du goulot (20, 20A, 20B).

4. Réservoir de liquide de frein selon la revendication 1,
**caractérisé en ce que**
les fentes intérieures (312, 312A, 312B) sont contenues dans des plans radiaux passant par l'axe (ZZ) du goulot (20, 20A, 20B).

5. Réservoir de liquide de frein selon la revendication 1,
**caractérisé en ce que**
les fentes intérieures (312, 312A, 312B) remontent dans le col (21, 21A, 21B) du goulot (20, 20A, 20B).

6. Réservoir de liquide de frein selon la revendication 1,
**caractérisé en ce que**
les fentes intérieures (312, 312A, 312B) débouchent dans la cavité du réservoir directement sous le plafond (11, 11A, 11B) du dessus (10, 10A, 10B).

7. Réservoir de liquide de frein selon la revendication 1,
**caractérisé en ce que**
le fond (32, 32A) est plein et traversé par un perçage (21, 21A) de section réduite.

8. Réservoir de liquide de frein selon la revendication 1,
**caractérisé en ce que**
le fond (32B) est formé de branches radiales (323) laissant des fentes radiales intérieures (325B), dans le prolongement des fentes intérieures (312B) entre les lamelles latérales (311B), croisant des arceaux concentriques (326B) réunis aux lamelles radiales (311B) à leurs intersections, les fentes radiales (325B) et celles (312B) des arceaux du fond formant des passages.

9. Réservoir de liquide de frein selon la revendication 1,
**caractérisé en ce que**
le panier (30, 30A, 30B) a une forme tronconique.

10. Réservoir de liquide de frein selon la revendication 1,
**caractérisé en ce que**
les parois latérales (31A) comportent au moins une lame pleine (315A) correspondant à plusieurs lamelles et reliée au fond (32A) et aux arceaux périphériques (313A).

## Patentansprüche

1. Bremsflüssigkeitsbehälter aus gespritztem Kunststoff, der durch Zusammenfügen eines Unterteils und eines Oberteils, der einen Befüllungsstutzen besitzt, der einteilig damit gegossen ist und mit einem Filter (30, 30A, 30B) in Form eines Korbs, der in den Behälter bis unter den Befüllungspegel herabhängt und einteilig mit dem Stutzen (20, 20A, 20B) verwirklicht ist, gebildet ist, wobei der Behälter **dadurch gekennzeichnet ist, dass**
- die Seitenwand (31, 31A, 31B) des Korbs aus inneren seitlichen Lamellen (311, 311A, 311B), die innere Schlitze (312, 312A, 312B) begrenzen, und aus äußeren Umfangsbögen (313, 313A, 313B), die Umfangsschlitze (314, 314A, 314B) freilassen, gebildet ist, wobei die Bögen die inneren Lamellen kreuzen, indem sie mit diesen über eine Verbindung aus dem Material vereinigt sind und an den Schnittpunkten der inneren Schlitze und der Umfangsschlitze Durchlässe bilden.

2. Behälter nach Anspruch 1,
**dadurch gekennzeichnet, dass**
der Boden (32, 32A) des Korbs, der den Filter (30, 30A) bildet, massiv ist und durch eine Umfangswand (322, 322A) begrenzt ist, die den normalen Befüllungspegel (NR) des Behälters (1, 1A) definiert.

3. Bremsflüssigkeitsbehälter nach Anspruch 1,
**dadurch gekennzeichnet, dass**
die inneren Schlitze (312, 312A, 312B) der seitlichen Lamellen (311, 311A, 311B) zu der Achse (ZZ) des Stutzens (20, 20A, 20B) parallel sind.

4. Bremsflüssigkeitsbehälter nach Anspruch 1,
**dadurch gekennzeichnet, dass**
die inneren Schlitze (312, 312A, 312B) in radialen Ebenen enthalten sind, die durch die Achse (ZZ) des Stutzens (20, 20A, 20B) verlaufen.

5. Bremsflüssigkeitsbehälter nach Anspruch 1,
**dadurch gekennzeichnet, dass**
die inneren Schlitze (312, 312A, 312B) in den Hals (21, 21A, 21B) des Stutzens (20, 20A, 20B) nach oben vorstehen.

6. Bremsflüssigkeitsbehälter nach Anspruch 1,
**dadurch gekennzeichnet, dass**
die inneren Schlitze (312, 312A, 312B) in den Hohlraum des Behälters direkt unter der Decke (11, 11A, 11B) des Oberteils (10, 10A, 10B) münden.

7. Bremsflüssigkeitsbehälter nach Anspruch 1,
**dadurch gekennzeichnet, dass**
der Boden (32, 32A) massiv ist und durch eine Durchlochung (21, 21A) mit verringertem Querschnitt durchquert wird.

8. Bremsflüssigkeitsbehälter nach Anspruch 1,
**dadurch gekennzeichnet, dass**
der Boden (32B) aus radialen Schenkeln (323) gebildet ist, die innere radiale Schlitze (325B) freilassen und in der Verlängerung der inneren Schlitze (312B) zwischen den seitlichen Lamellen (311B) mit konzentrischen Bögen (326B) kreuzen, die bei den radialen Lamellen (311B) an ihren Schnittpunkten vereinigt sind, wobei die radialen Schlitze (325B) und jene (312B) der Bögen des Bodens Durchlässe bilden.

9. Bremsflüssigkeitsbehälter nach Anspruch 1,
**dadurch gekennzeichnet, dass**
der Korb (30, 30A, 30B) eine Kegelstumpfform hat.

10. Bremsflüssigkeitsbehälter nach Anspruch 1,
**dadurch gekennzeichnet, dass**
die Seitenwände (31A) wenigstens ein massives Blatt (315A) umfassen, das mehreren Lamellen entspricht und mit dem Boden (32A) und mit den Umfangsbögen (313A) verbunden ist.

## Claims

1. Plastic injection-moulded brake fluid reservoir formed from the assembly of a lower section and of an upper section having a filler neck moulded in one piece and equipped with a basket-shaped filter (30, 30A, 30B) which descends into the reservoir below the filling level and is made in one piece with the neck (20, 20A, 20B),
which reservoir is **characterized in that**
- the lateral wall (31, 31A, 31B) of the basket is formed from inner lateral lamellae (311, 311A, 311B) delimiting inner slots (312, 312A, 312B) and from outer peripheral hoops (313, 313A, 313B) leaving peripheral slots (314, 314A, 314B), the hoops crossing the inner lamellae while being connected thereto by material bonding and forming passages at the intersection of the inner slots and the peripheral slots.

2. Reservoir according to Claim 1,
**characterized in that**
the bottom (32, 32A) of the basket forming the filter (30, 30A) is solid and bordered by a peripheral wall (322, 322A) defining the normal filling level (NR) of the reservoir (1, 1A).

3. Brake fluid reservoir according to Claim 1,
**characterized in that**
the inner slots (312, 312A, 312B) of the lateral lamellae (311, 311A, 311B) are parallel to the axis (ZZ) of the neck (20, 20A, 20B).

4. Brake fluid reservoir according to Claim 1,
**characterized in that**
the inner slots (312, 312A, 312B) are contained in radial planes passing through the axis (ZZ) of the neck (20, 20A, 20B).

5. Brake fluid reservoir according to Claim 1,
**characterized in that**
the inner slots (312, 312A, 312B) rise into the throat (21, 21A, 21B) of the neck (20, 20A, 20B).

6. Brake fluid reservoir according to Claim 1,
**characterized in that**
the inner slots (312, 312A, 312B) open into the cavity of the reservoir directly below the ceiling (11, 11A, 11B) of the upper section (10, 10A, 10B).

7. Brake fluid reservoir according to Claim 1,
**characterized in that**
the bottom (32, 32A) is solid and traversed by a perforation (21, 21A) of reduced cross section.

8. Brake fluid reservoir according to Claim 1,
**characterized in that**
the bottom (32B) is formed from radial branches (323) leaving inner radial slots (325B) which form an extension of the inner slots (312B) between the lateral lamellae (311B) and cross concentric hoops (326B) connected to the radial lamellae (311B) at their intersections, the radial slots (325B) and the slots (312B) of the hoops of the bottom forming passages.

9. Brake fluid reservoir according to Claim 1,
**characterized in that**
the basket (30, 30A, 30B) has a frustoconical shape.

10. Brake fluid reservoir according to Claim 1,
**characterized in that**
the lateral walls (31A) comprise at least one solid lamina (315A) corresponding to a plurality of lamellae and connected to the bottom (32A) and to the peripheral hoops (313A).
